# EUROPEAN PATENT APPLICATION

(11) **EP 4 769 072 A1**
(43) Date of publication of application: **01.07.2026**
(21) Application number: 25209257.2
(22) Date of filing: 16.10.2025
(51) Int. Cl.: G06F 1/3234

(54) **INFORMATION PROCESSING APPARATUS AND CONTROL METHOD**

(30) Priority: 26.12.2024 JP 2024230593
(71) Applicant: Lenovo Japan LLC, Tokyo 101-0021 (JP)
(72) Inventor: TAGAMI, Yuta, Nishi-ku, 3-6-1-21F (JP); LACSHIMINARAYANAN, Sugumaran, Nishi-ku, 3-6-1-21F (JP); INOUE, Keisuke, Nishi-ku, 3-6-1-21F (JP); SUMIKAWA, Toshinari, Nishi-ku, 3-6-1-21F (JP)
(74) Representative: Openshaw & Co.

(57) **Abstract**

An information processing apparatus and a control method that enable more appropriate control of screen brightness according to the connection status of an AC adapter and ambient brightness are provided. The information processing apparatus operates using power supplied from an AC adapter and is operable using power supplied from a built-in battery when supply of power from the AC adapter is stopped, and includes a sensor that detects ambient brightness, a display unit that displays a display image on a screen, and a processor that controls screen brightness of the display unit, wherein in an event that a power supply switches from the AC adapter to the built-in battery, the processor reduces the screen brightness, and, in an event that the power supply switches from the built-in battery back to the AC adapter, the processor controls the screen brightness after the switching back to the AC adapter on the basis of the screen brightness prior to the switching to the built-in battery, the screen brightness prior to the switching back to the AC adapter, and any change in ambient brightness detected by the sensor from the time of switching to the built-in battery until switching back to the AC adapter.

## Description

### BACKGROUND OF THE INVENTION

### Field of the Invention

The present invention relates to an information processing apparatus and a control method.

### Description of the Related Art

Conventionally, there are information processing apparatuses that control screen brightness according to ambient brightness (see, for example, Japanese Unexamined Patent Application Publication No. 2006-308713). For example, increasing the screen brightness when the surroundings are bright and also lowering the screen brightness when the surroundings are dark enable control that emphasizes visibility. Additionally, controlling the screen brightness to be high only when necessary achieves the effect of suppressing power consumption.

There also are information processing apparatuses that operate using power supplied from an AC adapter when the AC adapter is connected, and operate using power supplied from a built-in battery when the AC adapter is unplugged. Since the power available from the built-in battery is limited, some of these information processing apparatuses perform control to suppress power consumption by lowering the screen brightness when the AC adapter is unplugged.

### SUMMARY OF THE INVENTION

However, in the case of controlling the screen brightness according to the ambient brightness and additionally according to the connection status of the AC adapter, as described above, it was sometimes difficult to appropriately control the screen brightness. For example, when control was performed to lower the screen brightness in response to unplugging of an AC adapter, it was sometimes impossible to appropriately control the screen brightness when the AC adapter was reconnected, compared to the screen brightness prior to the unplugging of the AC adapter, depending on the ambient brightness or due to a change in ambient brightness.

The present invention has been made in view of the foregoing circumstances, and one of the objects thereof is to provide an information processing apparatus and a control method that enable more appropriate control of the screen brightness according to the connection status of an AC adapter and the ambient brightness.

To solve the above-described problems, an information processing apparatus according to the first aspect of the present invention is an information processing apparatus that operates using power supplied from an AC adapter and is operable using power supplied from a built-in battery when supply of power from the AC adapter is stopped, the apparatus including: a sensor that detects ambient brightness; a display unit that displays a display image on a screen; and a processor that controls screen brightness of the display unit, wherein the processor is operative, in an event that a power supply switches from the AC adapter to the built-in battery, to reduce the screen brightness, and, in an event that the power supply switches from the built-in battery back to the AC adapter, to control the screen brightness after the switching back to the AC adapter on the basis of the screen brightness prior to the switching to the built-in battery, the screen brightness prior to the switching back to the AC adapter, and any change in ambient brightness detected by the sensor from the time of switching to the built-in battery until switching back to the AC adapter.

In the information processing apparatus described above, the processor may be operative, in the event that the power supply switches from the AC adapter to the built-in battery, to store the screen brightness prior to the switching to the built-in battery in the storage unit as a first screen brightness and to control the screen brightness after the switching to the built-in battery to a second screen brightness that is lower than the first screen brightness on the basis of the ambient brightness detected by the sensor, and, in the event that the power supply switches from the built-in battery back to the AC adapter, to store the screen brightness prior to the switching back to the AC adapter in the storage unit as a third screen brightness and, upon determining that the apparatus has been moved to a bright location from the time of switching to the built-in battery until switching back to the AC adapter on the basis of the change in ambient brightness detected by the sensor, to control the screen brightness after the switching back to the AC adapter to the first screen brightness when the third screen brightness is not higher than the first screen brightness, and to control the screen brightness after the switching back to the AC adapter to a fourth screen brightness that is higher than the third screen brightness by a predetermined value when the third screen brightness is higher than the first screen brightness.

In the information processing apparatus described above, the processor may be operative, upon determining that the apparatus has been moved to a dark location from the time of switching to the built-in battery until switching back to the AC adapter on the basis of the change in ambient brightness detected by the sensor, to control the screen brightness after the switching back to the AC adapter to a fifth screen brightness that is higher than the third screen brightness by a predetermined value.

In the information processing apparatus described above, in controlling the screen brightness after the switching from the AC adapter to the built-in battery to the second screen brightness lower than the first screen brightness, the processor may be operative, upon determining that the apparatus is in a dark location on the basis of the ambient brightness detected by the sensor, to set the second screen brightness to a preset value that is lower than the first screen brightness when the first screen brightness is not lower than a fixed value, and to set the second screen brightness to a value that is lower than the first screen brightness by a predetermined percentage when the first screen brightness is lower than the fixed value, and, upon determining that the apparatus is in a bright location on the basis of the ambient brightness detected by the sensor, to set the second screen brightness to a value that is lower than the first screen brightness by a predetermined percentage.

A control method according to the second aspect of the present invention in an information processing apparatus including a sensor that detects ambient brightness, a display unit that displays a display image on a screen, and a processor that controls screen brightness of the display unit, the apparatus operating using power supplied from an AC adapter and being operable using power supplied from a built-in battery when supply of power from the AC adapter is stopped, includes the steps, performed by the processor, of: in an event that a power supply switches from the AC adapter to the built-in battery, reducing the screen brightness; and, in an event that the power supply switches from the built-in battery back to the AC adapter, controlling the screen brightness after the switching back to the AC adapter on the basis of the screen brightness prior to the switching to the built-in battery, the screen brightness prior to the switching back to the AC adapter, and any change in ambient brightness detected by the sensor from the time of switching to the built-in battery until switching back to the AC adapter.

The above-described aspects of the present invention enable more appropriate control of the screen brightness according to the connection status of the AC adapter and the ambient brightness.

### BRIEF DESCRIPTION OF THE DRAWINGS

FIG. 1 is an external view showing an example of the configuration of an information processing apparatus according to an embodiment.
FIG. 2 is a schematic block diagram showing an example of the hardware configuration of the information processing apparatus according to the embodiment.
FIG. 3 shows a first example of screen brightness control according to the embodiment.
FIG. 4 shows an example of controlling screen brightness according to ambient brightness according to the embodiment.
FIG. 5 shows a second example of the screen brightness control according to the embodiment.
FIG. 6 is a block diagram showing an example of the functional configuration related to the screen brightness control according to the embodiment.
FIG. 7 is a flowchart illustrating an example of screen brightness control processing according to the embodiment.

### DETAILED DESCRIPTION OF THE INVENTION

An embodiment of the present invention will be described below with reference to the drawings.

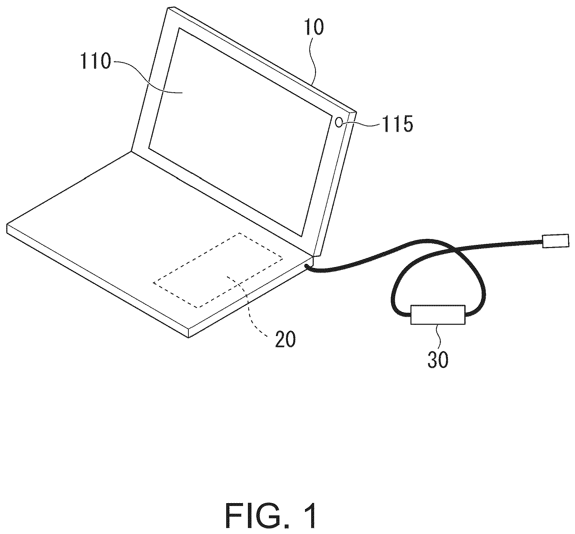

First, an overview of the information processing apparatus according to the present embodiment will be described with reference to FIG. 1.

FIG. 1 is an external view showing an example of the configuration of the information processing apparatus according to the present embodiment.

The information processing apparatus 10 shown in the figure is a clamshell (laptop) personal computer (PC). It should be noted that the information processing apparatus 10 may also be a tablet PC, a smartphone, or the like. The information processing apparatus 10 includes a battery 20 therein. An AC adapter 30 is also connected to the information processing apparatus 10. The AC adapter 30 converts commercial alternating current (AC) power into direct current (DC) power for input into the information processing apparatus 10.

The battery 20, which is a secondary battery (built-in battery) built into the information processing apparatus 10, supplies power to the information processing apparatus 10. The battery 20 can be reused by charging it from the AC adapter 30. For example, the battery 20 may be a lithium-ion battery. In addition to charging from the AC adapter 30, the battery 20 may also be rechargeable from a charger (not shown) as an external device.

The information processing apparatus 10 operates using power supplied from the AC adapter 30 when the AC adapter 30 is connected. When the AC adapter 30 is not connected (when supply of power from the AC adapter 30 is stopped), the information processing apparatus 10 is capable of operating using power supplied from the battery 20.

For example, when the AC adapter 30 is connected, the information processing apparatus 10 generates power for charging the battery 20 and power for supply to the units of the information processing apparatus 10 on the basis of the power supplied from the AC adapter 30. When the AC adapter 30 is not connected, the information processing apparatus 10 generates power for supply to the units of the information processing apparatus 10 on the basis of the power supplied from the battery 20.

The information processing apparatus 10 is provided with a display unit 110 that displays display images on a screen. An ambient light sensor (ALS) 115 is also provided on the periphery of the display unit 110. The ambient light sensor 115 is a sensor for detecting the brightness (for example, illuminance) around the information processing apparatus 10. It should be noted that the position of the ambient light sensor 115 shown in the figure is merely an example; it may be located elsewhere as long as the brightness around the information processing apparatus 10 can be detected.

The information processing apparatus 10 controls screen brightness of the display unit 110 according to the connection status of the AC adapter 30 and the ambient brightness. The basic control is, from the standpoint of power saving, to reduce the screen brightness when the AC adapter 30 is unplugged and the apparatus switches to the operation using the battery 20, and, from the standpoint of visibility, to increase the screen brightness as the ambient light is brighter and reduce the screen brightness as the ambient light is darker. However, since conventional controls could not always appropriately control the screen brightness, the information processing apparatus 10 according to the present embodiment has been configured to be able to control the screen brightness more appropriately than in the conventional controls by taking into consideration how the screen brightness has changed when controlling the screen brightness according to the connection status of the AC adapter 30 and the ambient brightness. The specific control of the screen brightness will be described later.

The configuration of the information processing apparatus 10 according to the present embodiment will now be described in detail.

### (Hardware Configuration)

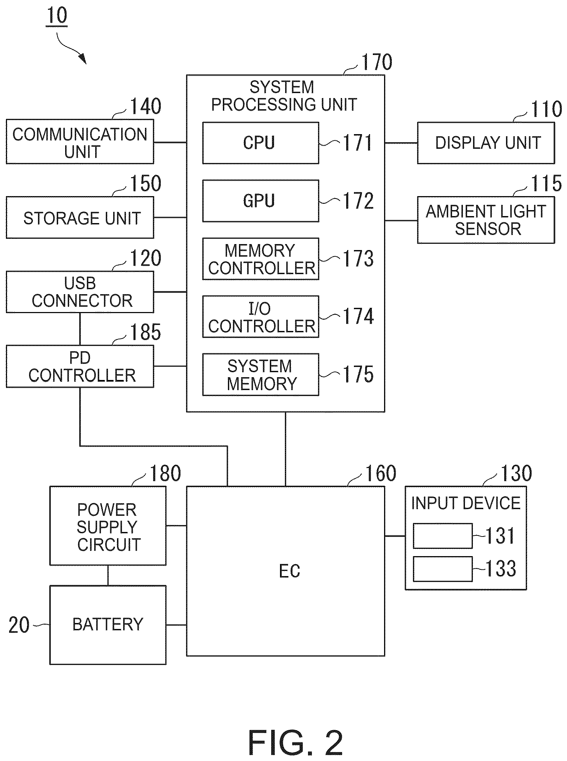

FIG. 2 is a schematic block diagram showing an example of the hardware configuration of the information processing apparatus 10 according to the present embodiment. The information processing apparatus 10 is configured to include the display unit 110, a USB connector 120, an input device 130, a communication unit 140, a storage unit 150, an embedded controller (EC) 160, a system processing unit 170, a power supply circuit 180, and a PD controller 185.

The display unit 110 is configured to include a liquid crystal display (LCD), an organic electroluminescence (EL) display, or the like. The display unit 110 displays, on the screen, display images based on display data generated by system processing performed by the system processing unit 170.

As described with reference to FIG. 1, the ambient light sensor 115 is a sensor that detects the brightness (for example, illuminance) around the information processing apparatus 10. The ambient light sensor 115 detects the amount of ambient light and outputs the photoelectrically converted value as an output value. The ambient light sensor 115 is configured to include a phototransistor, for example. The ambient light sensor 115 uses a resistor to convert the current flowing through the phototransistor, which varies according to the amount of ambient light, into a voltage and outputs this as a voltage value.

The USB connector 120 is a connector that utilizes a universal serial bus (USB) to connect peripheral devices. For example, the USB connector 120 is a USB Type-C connector. Connecting the AC adapter 30 to the USB connector 120 permits the AC adapter 30 to supply power. The information processing apparatus 10 may further include a USB Type-A connector as the USB connector 120.

The input device 130 is an input unit that accepts user inputs, and is configured to include a keyboard 131 and a touchpad 133, for example. In response to accepting operations on the keyboard 131 and the touchpad 133, the input device 130 outputs operation signals indicating the contents of the operations to the EC 160.

The communication unit 140 is communicably connected to other devices via a wireless or wired communication network, and transmits and receives various data. For example, the communication unit 140 is configured to include a communication device such as an Ethernet (registered trademark) or other wired LAN interface or a Wi-Fi (registered trademark) or other wireless LAN interface. It should be noted that the communication unit 140 may be configured to include a universal serial bus (USB) interface or a Bluetooth (registered trademark) interface.

The storage unit 150 is configured to include storage media such as a hard disk drive (HDD), a solid state drive (SSD), a random access memory (RAM), and a read only memory (ROM). The HDD or the SSD stores various programs such as an OS, device drivers, and applications, as well as various data acquired through the program operations.

The EC 160 is a microcomputer configured to include a CPU, a RAM, a ROM, and an input/output (I/O) logic circuit. The CPU of the EC 160 reads a control program prestored in its own ROM, and executes the read control program to perform its functions. For example, the EC 160, which operates independently of the system processing unit 170, instructs transitions of the system operating state (such as startup or transition to a standby state), and manages the operating state. The EC 160 is connected to the input device 130 and the power supply circuit 180. On the basis of operation signals input from the input device 130 according to user operations, the EC 160 transmits instruction information corresponding to the operations to the system processing unit 170 and others.

Additionally, the EC 160 communicates with the power supply circuit 180 to acquire information on the status of the battery 20 (such as remaining battery power and voltage) from the power supply circuit 180, and controls the charging when the power supply circuit 180 uses power supplied from the AC adapter 30 to charge the battery 20. Furthermore, the EC 160 outputs control signals to the power supply circuit 180 to control the supply of system power according to the operating state of the system.

The power supply circuit 180 generates power for supply to the units of the information processing apparatus 10 on the basis of the power supplied from the AC adapter 30 or the battery 20. For example, the power supply circuit 180 includes a DC/DC converter or the like, and converts the voltage of the power supplied from the AC adapter 30 or the battery 20 into a specified voltage, thereby generating system power for supply to the system processing unit 170 and others. The power supply circuit 180 also includes a charging circuit, and generates charging power for supply to the battery 20 on the basis of the power supplied from the AC adapter 30.

The PD controller 185 performs control corresponding to USB power delivery (PD). When the AC adapter 30 is connected to the USB connector 120, the PD controller 185 manages an external power supply function through which power is supplied via a USB VBUS (power line) terminal. The PD controller 185 also determines, for example, whether the AC adapter 30 has been connected to the USB connector 120, and controls the amount of power to be supplied from the AC adapter 30.

The system processing unit 170 is configured to include a CPU 171, a graphics processing unit (GPU) 172, a memory controller 173, an input/output (I/O) controller 174, and a system memory 175, and is capable of performing processing of various application software on an operating system (OS) through system processing by the OS. The CPU 171 and the GPU 172 are sometimes collectively referred to as the processor.

The CPU 171 controls the operating state of the system, such as startup or transition to a standby state (sleep) or the like, on the basis of the instruction information from the EC 160. For example, in the case where the system operating state is the standby state and instruction information instructing startup is input from the EC 160 according to the user operation, the CPU 171 causes transition from the standby state to a normal operating state. For example, at the time of startup, the CPU 171 begins the startup process when power is supplied from the power supply circuit 180 and instruction information indicating the startup is input from the EC 160. During the startup process, the CPU 171 detects and initializes minimum devices, such as the system memory 175 and the storage unit 150 (pre-boot). The CPU 171 loads system firmware from the storage unit 150 into the system memory 175, and detects and initializes the other devices including the communication unit 140 and the display unit 110 (post-processing). The initialization includes setting initial parameters and other processing. It should be noted that the post-processing may be partially omitted during the transition (resume) from the standby state (sleep) to the normal operating state. After completion of the startup process, the CPU 171 begins executing the system processing by the OS.

The GPU 172 is connected to the display unit 110. The GPU 172 performs image processing under the control of the CPU 171 to generate display data. The GPU 172 outputs the generated display data to the display unit 110. It should be noted that the CPU 171 and the GPU 172 may be formed integrally as a single core, or the CPU 171 and the GPU 172 formed as separate cores may share the load therebetween. The number of processors is not limited to one; it may be more than one.

The memory controller 173 controls the reading and writing of data to and from the system memory 175, the storage unit 150, and the like.

The I/O controller 174 controls the input and output of data to and from the display unit 110, the ambient light sensor 115, the USB connector 120, the communication unit 140, and the EC 160.

The system memory 175 is used as a load area for the processor execution programs and as a work area for writing processed data.

### (Screen Brightness Control)

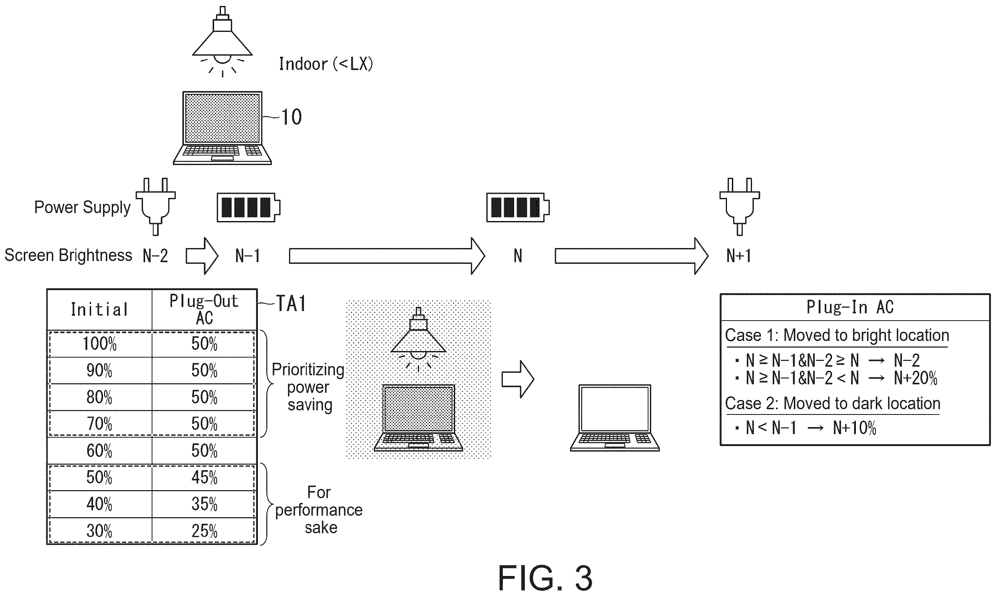

The screen brightness control in the information processing apparatus 10 to control the screen brightness of the display unit 110 according to the connection status of the AC adapter 30 and the ambient brightness will now be described in detail with reference to FIGS. 3 to 5. In the following, the screen brightness of the display unit 110 will simply be referred to as screen brightness.

FIG. 3 shows a first example of screen brightness control according to the present embodiment. FIG. 3 shows an example of the screen brightness control in the case where the apparatus is being used indoors as an initial state. The information processing apparatus 10 determines whether the environment in which the information processing apparatus 10 is being used is indoors (Indoor) or outdoors (Outdoor) on the basis of the ambient brightness (for example, illuminance) detected by the ambient light sensor 115. For example, the information processing apparatus 10 determines that the apparatus is being used indoors when the illuminance detected by the ambient light sensor 115 is lower than a threshold value LX. The threshold value LX is the illuminance threshold value used to determine whether the environment is indoors or outdoors.

Here, a description will be provided of how the screen brightness is reduced when the apparatus switches from the initial state in which it operates using the AC adapter 30 (Initial) to a state in which it operates using the battery 20 with the AC adapter 30 unplugged (Plug-Out AC), and then how the screen brightness is controlled when the AC adapter 30 is reconnected (Plug-In AC).

The screen brightness in the initial state (Initial), with the AC adapter 30 connected (before the AC adapter 30 is unplugged), is designated as "N-2"; the screen brightness with the AC adapter 30 unplugged and the power switched to the battery 20 (Plug-Out AC) is designated as "N-1"; the screen brightness thereafter, before the AC adapter 30 is reconnected, is designated as "N"; and the screen brightness when the AC adapter 30 is reconnected (Plug-In AC) is designated as "N+1".

Table TA1 in FIG. 3 shows exemplary settings for the screen brightness to be controlled when the AC adapter 30 is unplugged indoors. The screen brightness is set in increments of 10% between 30% and 100%, with 100% representing the maximum brightness. The screen brightness setting is 0% when the screen is off (display off).

In this table TA1, if the screen brightness "N-2" prior to unplugging of the AC adapter 30 is 50% or less, the screen brightness "N-1" when the AC adapter 30 is unplugged is set to -5% relative to the screen brightness "N-2". The reduction amount is made small in this setting, due to the low original screen brightness, so as to ensure performance (to prevent the screen from becoming too difficult to see). If the screen brightness "N-2" prior to unplugging of the AC adapter 30 is 60%, the screen brightness "N-1" when the AC adapter 30 is unplugged is set to 50% (-10% relative to the screen brightness "N-2"). If the screen brightness "N-2" prior to unplugging of the AC adapter 30 is 70% to 100%, the screen brightness "N-1" when the AC adapter 30 is unplugged is set uniformly to 50% to prioritize power saving.

Here, one conventional control has been to increase the screen brightness uniformly by 20%, for example, when the AC adapter 30 is reconnected. With such a control, if the screen brightness "N-2" prior to unplugging of the AC adapter 30 is 70%, the screen brightness will be reduced to 50% in response to unplugging of the AC adapter 30, and when the AC adapter 30 is reconnected, the screen brightness will return to 70% (50%+20%). However, if the screen brightness "N-2" prior to unplugging of the AC adapter 30 is 100%, the screen brightness will be reduced to 50% in response to unplugging of the AC adapter 30, and even when the AC adapter 30 is reconnected, the screen brightness will only return to 70%, instead of returning to the original screen brightness "N-2", which may cause discomfort for the user.

Furthermore, even in the state where the AC adapter 30 is disconnected (where the apparatus is operating on the battery 20), the information processing apparatus 10 may be moved to a bright location or a dark location. In this case, the screen brightness is changed in accordance with the change in ambient brightness, so when the AC adapter 30 is reconnected, the correlation with the original screen brightness may become further distorted.

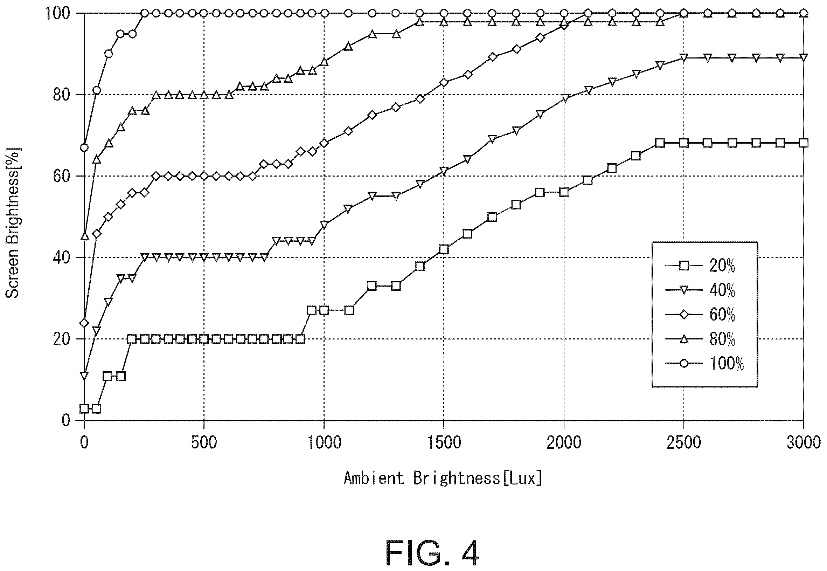

FIG. 4 shows an example of controlling screen brightness according to ambient brightness according to the present embodiment. In this figure, the vertical axis represents screen brightness (%), and the horizontal axis represents ambient brightness (illuminance in Lux). The figure shows changes in screen brightness relative to ambient brightness for each screen brightness setting in a graph form. Screen brightness is increased as the surroundings become brighter and decreased as the surroundings become darker, with 100% representing the maximum brightness. In the case where the ambient brightness changes while the AC adapter 30 is disconnected (while the apparatus is operating on the battery 20), the information processing apparatus 10 controls the screen brightness "N" in accordance with the graph in FIG. 4, for example.

The information processing apparatus 10 according to the present embodiment controls the screen brightness "N+1" at the time of reconnection of the AC adapter 30 on the basis of: the screen brightness "N" before the AC adapter 30 is reconnected (prior to the switching back to the AC adapter 30); the screen brightness "N-2" before the AC adapter 30 is unplugged (prior to the switching to the battery 20); and any change in ambient brightness from when the AC adapter 30 is unplugged until the AC adapter 30 is reconnected. The change in ambient brightness from when the AC adapter 30 is unplugged until the AC adapter 30 is reconnected is also correlated with the change from the screen brightness "N-1" to the screen brightness "N".

The method for deriving the screen brightness "N+1" will be described below, wherein the case in which the apparatus is moved to a bright location after the AC adapter 30 is unplugged and before the AC adapter 30 is reconnected (screen brightness "N" ≥ screen brightness "N-1") is designated as "Case 1", and the case in which the apparatus is moved to a dark location (screen brightness "N" < screen brightness "N-1") is designated as "Case 2".

The case in which the apparatus is moved to a bright location (screen brightness "N" ≥ screen brightness "N-1") includes, for example, moving from an indoor location to an outdoor location, and moving to a brighter location indoors. The case in which the surroundings become brighter indoors due to a change in lighting conditions also corresponds to the case in which the apparatus is moved to a bright location (screen brightness "N" ≥ screen brightness "N-1"). The case in which the apparatus is moved to a dark location (screen brightness "N" < screen brightness "N-1") includes, for example, moving to a darker location indoors. The case in which the surroundings become darker indoors due to a change in lighting conditions also corresponds to the case in which the apparatus is moved to a dark location (screen brightness "N" < screen brightness "N-1").

"Case 1": The case in which the apparatus is moved to a bright location (screen brightness "N" ≥ screen brightness "N-1").
- If the screen brightness "N-2" before the AC adapter 30 is unplugged (prior to the switching to the battery 20) is not lower than the screen brightness "N" before the AC adapter 30 is reconnected (prior to the switching back to the AC adapter 30) (screen brightness "N-2" ≥ screen brightness "N"), then the information processing apparatus 10 controls the screen brightness "N+1" at the time of reconnection of the AC adapter 30 to the screen brightness "N-2".
- If the screen brightness "N-2" before the AC adapter 30 is unplugged (prior to the switching to the battery 20) is lower than the screen brightness "N" before the AC adapter 30 is reconnected (prior to the switching back to the AC adapter 30) (screen brightness "N-2" < screen brightness "N"), then the information processing apparatus 10 controls the screen brightness "N+1" at the time of reconnection of the AC adapter 30 to a screen brightness "N"+20%.

"Case 2": The case in which the apparatus is moved to a dark location (screen brightness "N" < screen brightness "N-1").
- The information processing apparatus 10 controls the screen brightness "N+1" at the time of reconnection of the AC adapter 30 to a screen brightness "N"+10%.

Accordingly, in the case where the apparatus is moved to a bright location, if screen brightness "N-2" ≥ screen brightness "N", then the information processing apparatus 10 makes the screen brightness "N+1" at the time of reconnection of the AC adapter 30 return to the original screen brightness "N-2", which does not cause discomfort. In the case where the apparatus is moved to a bright location, if screen brightness "N-2" < screen brightness "N", making the screen brightness "N+1" at the time of reconnection of the AC adapter 30 return to the original screen brightness "N-2" would be undesirable since the screen brightness would decrease, so the information processing apparatus 10 increases the screen brightness by 20%, instead of returning it to the original screen brightness "N-2", thereby avoiding discomfort. In the case where the apparatus is moved to a dark location, making the screen brightness "N+1" at the time of reconnection of the AC adapter 30 return to the original screen brightness "N-2" would result in a screen brightness that is too high, so the information processing apparatus 10 increases the screen brightness by only 10%.

In this manner, the information processing apparatus 10 can appropriately control the screen brightness "N+1" at the time of reconnection of the AC adapter 30 on the basis of: the connection status of the AC adapter 30; any change in ambient brightness; the screen brightness "N-2" before the AC adapter 30 is unplugged; the screen brightness "N-1" when the AC adapter 30 is unplugged; and the screen brightness "N" before the AC adapter 30 is reconnected.

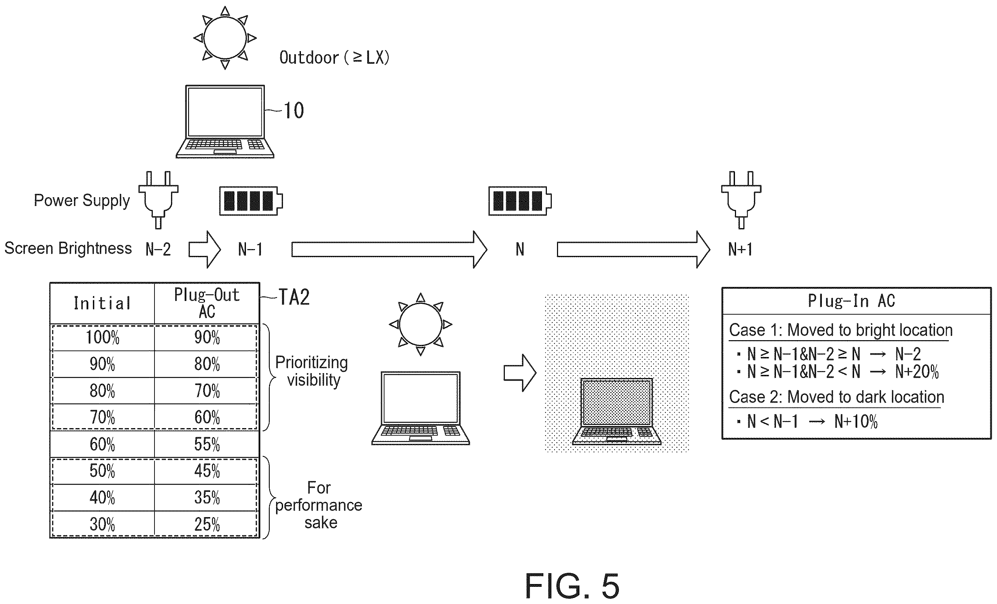

FIG. 5 shows a second example of the screen brightness control according to the present embodiment. FIG. 5 shows an example of the screen brightness control in the case where the apparatus is being used outdoors (Outdoor) as an initial state. For example, the information processing apparatus 10 determines that the apparatus is being used outdoors when the illuminance detected by the ambient light sensor 115 is not lower than the threshold value LX.

Here, as in the example of indoors illustrated in FIG. 3, a description will be provided of how the screen brightness is reduced when the apparatus switches from the initial state in which it operates using the AC adapter 30 (Initial) to a state in which it operates using the battery 20 with the AC adapter 30 unplugged (Plug-Out AC), and then how the screen brightness is controlled when the AC adapter 30 is reconnected (Plug-In AC).

Table TA2 in FIG. 5 shows exemplary settings for the screen brightness to be controlled when the AC adapter 30 is unplugged outdoors. The screen brightness is set in increments of 10% between 30% and 100%, with 100% representing the maximum brightness. The screen brightness setting is 0% when the screen is off (display off).

In this table TA2, if the screen brightness "N-2" prior to unplugging of the AC adapter 30 is 50% or less, the screen brightness "N-1" when the AC adapter 30 is unplugged is set to -5% relative to the screen brightness "N-2". The reduction amount is made small in this setting, due to the low original screen brightness, so as to ensure performance (to prevent the screen from becoming too difficult to see). If the screen brightness "N-2" prior to unplugging of the AC adapter 30 is 60%, the screen brightness "N-1" when the AC adapter 30 is unplugged is set to 55% (-5% relative to the screen brightness "N-2"). If the screen brightness "N-2" prior to unplugging of the AC adapter 30 is 70% to 100%, the screen brightness "N-1" when the AC adapter 30 is unplugged is set to -10% relative to the screen brightness "N-2". This is because, in contrast to the case of indoors where the screen brightness is uniformly set to 50% to prioritize power saving, visibility is prioritized outdoors due to the bright surroundings.

In the case where the ambient brightness changes while the AC adapter 30 is disconnected (while the apparatus is operating on the battery 20), the information processing apparatus 10 controls the screen brightness "N" in accordance with the graph in FIG. 4, for example. Thereafter, when the AC adapter 30 is reconnected, the information processing apparatus 10 controls the screen brightness "N+1" as in the example of indoors shown in FIG. 3.

Specifically, the information processing apparatus 10 controls the screen brightness "N+1" at the time of reconnection of the AC adapter 30 on the basis of: the screen brightness "N" before the AC adapter 30 is reconnected (prior to the switching back to the AC adapter 30); the screen brightness "N-2" before the AC adapter 30 is unplugged (prior to the switching to the battery 20); and any change in screen brightness from when the AC adapter 30 is unplugged until the AC adapter 30 is reconnected, i.e., the change from the screen brightness "N-1" to the screen brightness "N".

The method for deriving the screen brightness "N+1" will be described below, wherein the case in which the apparatus is moved to a bright location after the AC adapter 30 is unplugged and before the AC adapter 30 is reconnected (screen brightness "N" ≥ screen brightness "N-1") is designated as "Case 1", and the case in which the apparatus is moved to a dark location (screen brightness "N" < screen brightness "N-1") is designated as "Case 2".

The case in which the apparatus is moved to a bright location (screen brightness "N" ≥ screen brightness "N-1") includes, for example, moving to a brighter location outdoors (e.g., moving from shade to sunlight). The case in which the surroundings become brighter outdoors due to a change in weather conditions also corresponds to the case in which the apparatus is moved to a bright location (screen brightness "N" ≥ screen brightness "N-1"). The case in which the apparatus is moved to a dark location (screen brightness "N" < screen brightness "N-1") includes, for example, moving from an outdoor location to an indoor location, and moving to a darker location outdoors (e.g., moving from sunlight to shade). The case in which the surroundings become darker outdoors due to a change in weather conditions also corresponds to the case in which the apparatus is moved to a dark location (screen brightness "N" < screen brightness "N-1").

"Case 1": The case in which the apparatus is moved to a bright location (screen brightness "N" ≥ screen brightness "N-1").
- If the screen brightness "N-2" before the AC adapter 30 is unplugged (prior to the switching to the battery 20) is not lower than the screen brightness "N" before the AC adapter 30 is reconnected (prior to the switching back to the AC adapter 30) (screen brightness "N-2" ≥ screen brightness "N"), then the information processing apparatus 10 controls the screen brightness "N+1" at the time of reconnection of the AC adapter 30 to the screen brightness "N-2".
- If the screen brightness "N-2" before the AC adapter 30 is unplugged (prior to the switching to the battery 20) is lower than the screen brightness "N" before the AC adapter 30 is reconnected (prior to the switching back to the AC adapter 30) (screen brightness "N-2" < screen brightness "N"), then the information processing apparatus 10 controls the screen brightness "N+1" at the time of reconnection of the AC adapter 30 to a screen brightness "N"+20%.

"Case 2": The case in which the apparatus is moved to a dark location (screen brightness "N" < screen brightness "N-1").
- The information processing apparatus 10 controls the screen brightness "N+1" at the time of reconnection of the AC adapter 30 to a screen brightness "N"+10%.

The above-described method for deriving the screen brightness "N+1" in "Case 1" and "Case 2" is similar to the method for deriving the screen brightness "N+1" shown in FIG. 3. The information processing apparatus 10 can appropriately control the screen brightness "N+1" at the time of reconnection of the AC adapter 30 on the basis of: the connection status of the AC adapter 30; any change in ambient brightness; the screen brightness "N-2" before the AC adapter 30 is unplugged; the screen brightness "N-1" when the AC adapter 30 is unplugged; and the screen brightness "N" before the AC adapter 30 is reconnected.

### (Functional Configuration for Screen Brightness Control Processing)

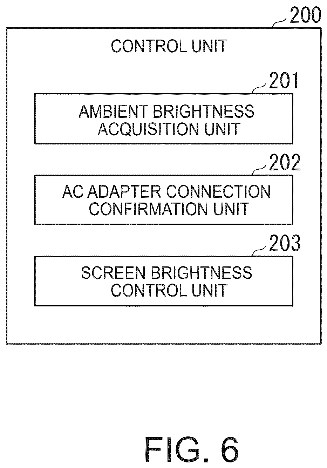

The functional configuration for performing screen brightness control processing in the information processing apparatus 10 will now be described in detail with reference to FIG. 6.

FIG. 6 is a block diagram showing an example of the functional configuration related to the screen brightness control according to the present embodiment. The control unit 200 has a functional configuration that is implemented by, for example, the CPU 171 executing a program that performs the screen brightness control processing. The control unit 200 includes an ambient brightness acquisition unit 201, an AC adapter connection confirmation unit 202, and a screen brightness control unit 203.

It should be noted that the data for the screen brightness setting table TA1 in FIG. 3, the settings (graph) for controlling screen brightness according to ambient brightness in FIG. 4, and the screen brightness setting table TA2 in FIG. 5 are set by the above-described program performing the screen brightness control processing, and are deployed into the system memory 175 in accordance with the execution of that program and become available for use in the screen brightness control processing.

The ambient brightness acquisition unit 201 acquires the detection results of ambient brightness (e.g., illuminance) by the ambient light sensor 115.

The AC adapter connection confirmation unit 202 confirms the connection status of the AC adapter 30 (i.e., whether or not it is connected to the USB connector 120). For example, the AC adapter connection confirmation unit 202 acquires a plugging/unplugging event generated when the AC adapter 30 is plugged into or unplugged from the USB connector 120, and determines if the AC adapter 30 has been unplugged and if the AC adapter 30 has been connected (plugged in).

The screen brightness control unit 203 performs the screen brightness control described with reference to FIGS. 3 to 5, by using the detection results of the ambient brightness (e.g., illuminance) acquired by the ambient brightness acquisition unit 201 and the confirmation results of the connection status of the AC adapter 30 by the AC adapter connection confirmation unit 202.

For example, in the case where the AC adapter 30 in the connected state is unplugged, the screen brightness control unit 203 reduces the screen brightness by referring to table TA1 in FIG. 3 or table TA2 in FIG. 5 on the basis of the detection result of the ambient brightness (e.g., illuminance) acquired by the ambient brightness acquisition unit 201. That is, the screen brightness control unit 203 reduces the screen brightness when the power supply switches from the AC adapter 30 to the battery 20.

For example, when the screen brightness control unit 203 is to control the screen brightness after the AC adapter 30 is unplugged (after the switching from the AC adapter 30 to the battery 20) to the screen brightness "N-1" lower than the screen brightness "N-2", if it is determined that the apparatus is located indoors (in a dark location) on the basis of the ambient brightness, the screen brightness control unit 203 sets the screen brightness "N-1" to a preset value (e.g., 50%) that is lower than the screen brightness "N-2" when the screen brightness "N-2" is a fixed value or higher (e.g., 60% or higher), and sets the screen brightness "N-1" to a value (e.g., a screen brightness "N-2"-5%) that is lower than the screen brightness "N-2" by a predetermined percentage when the screen brightness "N-2" is lower than the fixed value (e.g., lower than 60%). If it is determined that the apparatus is located outdoors (in a bright location) on the basis of the ambient brightness, the screen brightness control unit 203 sets the screen brightness "N-1" to a value (e.g., a screen brightness "N-2"-10%) that is lower than the screen brightness "N-2" by a predetermined percentage.

Next, in the case where the AC adapter 30 in the disconnected state is reconnected, the screen brightness control unit 203 controls the screen brightness "N+1" at the time of reconnection of the AC adapter 30 on the basis of: the screen brightness "N-2" before the AC adapter 30 is unplugged; the screen brightness "N" before the AC adapter 30 is reconnected; and any change in screen brightness, according to the change in ambient brightness, from the screen brightness "N-1" when the AC adapter 30 is unplugged to the screen brightness "N" before the AC adapter 30 is reconnected.

That is, in the event that the power supply switches from the battery 20 back to the AC adapter 30, the screen brightness control unit 203 controls the screen brightness "N+1" after the switching back to the AC adapter 30 on the basis of the screen brightness "N-2" prior to the switching to the battery 20, the screen brightness "N" prior to the switching back to the AC adapter 30, and any change in ambient brightness detected by the ambient light sensor 115 from the time of switching to the battery 20 until switching back to the AC adapter 30.

Specifically, when the AC adapter 30 is unplugged (i.e., when the power supply switches from the AC adapter 30 to the battery 20), the screen brightness control unit 203 stores the value of the screen brightness "N-2" prior to the switching to the battery 20 in the system memory 175. The screen brightness control unit 203 also controls the screen brightness after the AC adapter 30 is unplugged (after the switching to the battery 20) to the screen brightness "N-1" lower than the screen brightness "N-2", by referring to table TA1 in FIG. 3 or table TA2 in FIG. 5 on the basis of the ambient brightness detected by the ambient light sensor 115.

When the AC adapter 30 in the disconnected state is reconnected (when the power supply switches from the battery 20 back to the AC adapter 30), the screen brightness control unit 203 stores the value of the screen brightness "N" prior to the switching back to the AC adapter 30 in the system memory 175. In addition, if it is determined that the apparatus has been moved to a bright location before the AC adapter 30 is reconnected, the screen brightness control unit 203 controls the value of the screen brightness "N+1" at the time of reconnection of the AC adapter 30 to the screen brightness value "N-2" when the screen brightness "N" is not higher than the screen brightness "N-2", and, when the screen brightness "N" is higher than the screen brightness "N-2", the unit 203 controls the screen brightness "N+1" at the time of reconnection of the AC adapter 30 to a screen brightness value, "N"+20%, that is higher than the screen brightness "N" by a predetermined value.

If it is determined that the apparatus has been moved to a dark location before the AC adapter 30 is reconnected, the screen brightness control unit 203 controls the screen brightness "N+1" at the time of reconnection of the AC adapter 30 to a screen brightness value, "N"+10%, that is higher than the screen brightness "N" by a predetermined value.

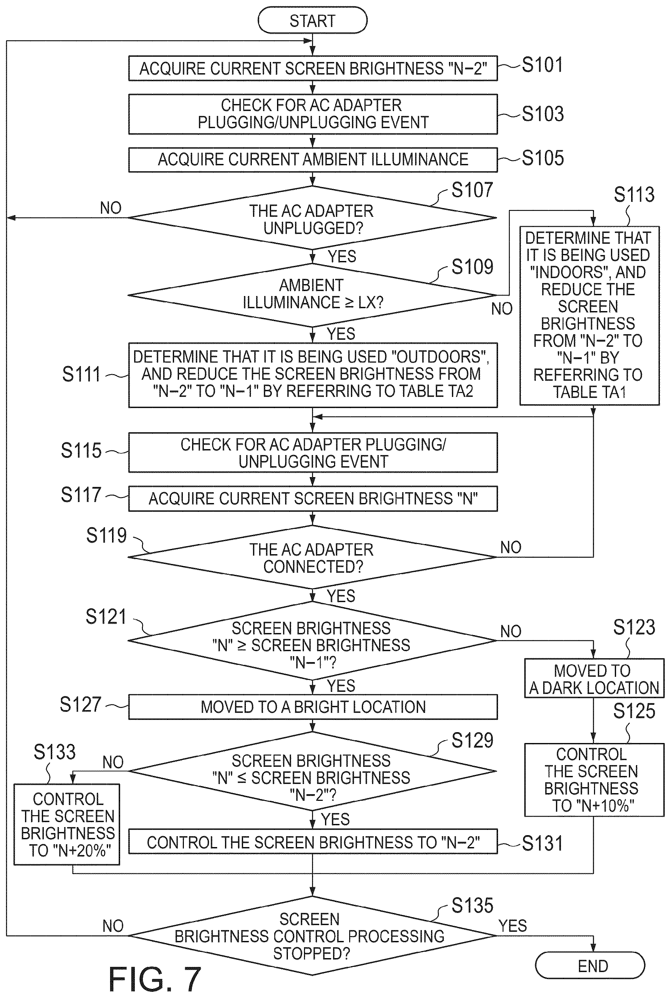

Now, with reference to FIG. 7, the operations for screen brightness control processing performed by the control unit 200 will be described.

FIG. 7 is a flowchart illustrating an example of screen brightness control processing according to the present embodiment. The screen brightness control processing shown in this figure is for performing the screen brightness control described with reference to FIGS. 3 and 5. The initial state is the state where the AC adapter 30 is connected. The control unit 200 is configured to store any screen brightness values (settings) and ambient brightness (here, referred to as ambient illuminance) values acquired during this screen brightness control processing in the system memory 175, as appropriate.

(Step S101) The control unit 200 acquires a current screen brightness "N-2". Then, the process proceeds to step S103.

(Step S103) The control unit 200 checks for an AC adapter 30 plugging/unplugging event. Then, the process proceeds to step S105.

(Step S105) The control unit 200 acquires a detection result of the current ambient illuminance by the ambient light sensor 115. Then, the process proceeds to step S107.

(Step S107) The control unit 200 determines whether the AC adapter 30 has been unplugged on the basis of whether an AC adapter 30 plugging/unplugging event has occurred. If the control unit 200 determines that the AC adapter 30 has not been unplugged (NO), the process returns to step S101. On the other hand, if the control unit 200 determines that the AC adapter 30 has been unplugged (YES), the process proceeds to step S109.

(Step S109) The control unit 200 determines whether the current ambient illuminance acquired in step S105 is equal to or higher than a threshold value LX. If the control unit 200 determines that the current ambient brightness is equal to or higher than the threshold value LX (YES), the process proceeds to step S111. On the other hand, if the control unit 200 determines that the current ambient brightness is lower than the threshold value LX (NO), the process proceeds to step S113.

(Step S111) The control unit 200 determines that the apparatus is being used outdoors (in a bright location), and reduces the screen brightness from the current screen brightness "N-2" to a screen brightness "N-1" by referring to table TA2 (see FIG. 5). Then, the process proceeds to step S115.

(Step S113) The control unit 200 determines that the apparatus is being used indoors (in a dark location), and reduces the screen brightness from the current screen brightness "N-2" to a screen brightness "N-1" by referring to table TA1 (see FIG. 3). Then, the process proceeds to step S115.

(Step S115) The control unit 200 checks for an AC adapter 30 plugging/unplugging event. Then, the process proceeds to step S117.

(Step S117) The control unit 200 acquires a current screen brightness "N". Then, the process proceeds to step S119.

Here, the screen brightness "N" is changed according to the ambient brightness. For example, the control unit 200 acquires the current ambient illuminance to control the screen brightness "N" in accordance with the settings (graph), shown in FIG. 4, for controlling screen brightness according to ambient brightness. It should be noted that this process of controlling the screen brightness "N" in accordance with the ambient brightness may be carried out by a program process that is different from the process of controlling the screen brightness in accordance with the plugging/unplugging of the AC adapter 30. In other words, in step S117, the control unit 200 only needs to acquire at least the current screen brightness "N", and the process of controlling the screen brightness "N" in accordance with the ambient brightness (ambient illuminance) may be carried out by a unit other than the control unit 200.

(Step S119) The control unit 200 determines whether the AC adapter 30 has been connected on the basis of whether the AC adapter 30 plugging/unplugging event has occurred. If the control unit 200 determines that the AC adapter 30 has not been connected (NO), the process returns to step S115. On the other hand, if the control unit 200 determines that the AC adapter 30 has been connected (YES), the process proceeds to step S121.

(Step S121) The control unit 200 determines whether the current screen brightness "N" is equal to or higher than the screen brightness "N-1". If the control unit 200 determines that the screen brightness "N" is equal to or higher than the screen brightness "N-1" (YES), the process proceeds to step S127. On the other hand, if the control unit 200 determines that the screen brightness "N" is lower than the screen brightness "N-1" (NO), the process proceeds to step S123.

(Step S123) The control unit 200 determines that the apparatus has been moved to a dark location after the AC adapter 30 is unplugged and before it is reconnected. The process then proceeds to step S125.

(Step S125) The control unit 200 controls the screen brightness "N+1" at the time of reconnection of the AC adapter 30 to a screen brightness "N"+10%. Then, the process proceeds to step S135.

(Step S127) The control unit 200 determines that the apparatus has been moved to a bright location after the AC adapter 30 is unplugged and before it is reconnected. The process then proceeds to step S129.

(Step S129) The control unit 200 determines whether the current screen brightness "N" is equal to or lower than the screen brightness "N-2". If the control unit 200 determines that the screen brightness "N" is equal to or lower than the screen brightness "N-2" (YES), the process proceeds to step S131. On the other hand, if the control unit 200 determines that the screen brightness "N" is higher than the screen brightness "N-2" (NO), the process proceeds to step S133.

(Step S131) The control unit 200, since the current screen brightness "N" is equal to or lower than the screen brightness "N-2", controls the screen brightness "N+1" at the time of reconnection of the AC adapter 30 to the original screen brightness "N-2". Then, the process proceeds to step S135.

(Step S133) The control unit 200, since the current screen brightness "N" is higher than the screen brightness "N-2", controls the screen brightness "N+1" at the time of reconnection of the AC adapter 30 to a screen brightness "N"+20%. Then, the process proceeds to step S135.

(Step S135) The control unit 200 determines whether this screen brightness control processing has been stopped. For example, when a user operation of selecting the stop of the screen brightness control processing has been made, the control unit 200 determines that the screen brightness control processing has been stopped. The operation of selecting the stop of the screen brightness control processing can be performed in the user interface (UI) provided by the program performing this screen brightness control processing. If the control unit 200 determines that the screen brightness control processing has not been stopped (NO), the process returns to step S101. On the other hand, if the control unit 200 determines that the screen brightness control processing has been stopped (YES), the screen brightness control processing is terminated.

As described above, the information processing apparatus 10 according to the present embodiment operates using power supplied from the AC adapter 30, and also is operable using power supplied from the battery 20 (an example of the built-in battery) when supply of power from the AC adapter 30 is stopped (e.g., when the AC adapter 30 is disconnected). The information processing apparatus 10 includes the ambient light sensor 115 (an example of the sensor) that detects ambient brightness, the display unit 110 that displays a display image on a screen, and the CPU 171 (an example of the processor) that controls screen brightness of the display unit 110. In an event that a power supply switches from the AC adapter 30 to the battery 20, the information processing apparatus 10 reduces the screen brightness. In an event that the power supply switches from the battery 20 back to the AC adapter 30, the information processing apparatus 10 controls the screen brightness "N+1" after the switching back to the AC adapter 30 (screen brightness at the time of reconnection of the AC adapter 30) on the basis of the screen brightness "N-2" prior to the switching to the battery 20, the screen brightness "N" prior to the switching back to the AC adapter 30, and any change in ambient brightness detected by the ambient light sensor 115 from the time of switching to the battery 20 until switching back to the AC adapter 30.

Accordingly, when the AC adapter 30 is disconnected and then reconnected, the information processing apparatus 10 controls the screen brightness "N+1" at the time of reconnection of the AC adapter 30 (screen brightness after the switching back to the AC adapter 30), not based solely on the screen brightness "N" before the AC adapter 30 is reconnected (prior to the switching back to the AC adapter 30), but also taking into consideration the screen brightness "N-2" before the AC adapter 30 is disconnected (prior to the switching to the battery 20) and any change in ambient brightness until the AC adapter 30 is reconnected. This enables more appropriate control of the screen brightness according to the connection status of the AC adapter 30 and the ambient brightness.

For example, in the event that the power supply switches from the AC adapter 30 to the battery 20, the information processing apparatus 10 stores the screen brightness prior to the switching to the battery 20 in the system memory 175 (an example of the storage unit) as a screen brightness "N-2" (an example of the first screen brightness). Additionally, the information processing apparatus 10 controls the screen brightness after the switching to the battery 20 to a screen brightness "N-1" (an example of the second screen brightness) that is lower than the screen brightness "N-2" on the basis of the ambient brightness detected by the ambient light sensor 115. In the event that the power supply switches from the battery 20 back to the AC adapter 30, the information processing apparatus 10 stores the screen brightness prior to the switching back to the AC adapter 30 in the system memory 175 as a screen brightness "N" (an example of the third screen brightness). Additionally, upon determining that the apparatus has been moved to a bright location from the time of switching to the battery 20 until switching back to the AC adapter 30 on the basis of the change in ambient brightness detected by the ambient light sensor 115, the information processing apparatus 10 controls the screen brightness "N+1" after the switching back to the AC adapter 30 to the screen brightness "N-2" when the screen brightness "N" is not higher than the screen brightness "N-2", and controls the screen brightness "N+1" after the switching back to the AC adapter 30 to a screen brightness "N"+20% (an example of the fourth screen brightness) that is higher than the screen brightness "N" by a predetermined value when the screen brightness "N" is higher than the screen brightness "N-2".

Accordingly, in the case where the apparatus has been moved to a bright location before the AC adapter 30 is reconnected, the information processing apparatus 10 can appropriately control the screen brightness "N+1" at the time of reconnection of the AC adapter 30 such that it does not decrease below the original screen brightness "N-2" prior to the disconnection of the AC adapter 30.

Furthermore, upon determining that the apparatus has been moved to a dark location from the time of switching to the battery 20 until switching back to the AC adapter 30 on the basis of the change in ambient brightness detected by the ambient light sensor 115, the information processing apparatus 10 controls the screen brightness "N+1" after the switching back to the AC adapter 30 to a screen brightness "N"+10% (an example of the fifth screen brightness) that is higher than the screen brightness "N" by a predetermined value.

Accordingly, in the case where the apparatus has been moved to a dark location before the AC adapter 30 is reconnected, the information processing apparatus 10 can control the screen brightness "N+1" at the time of reconnection of the AC adapter 30 to an appropriate screen brightness suitable for the connection of the AC adapter 30 in a dark location.

Furthermore, when the information processing apparatus 10 is to control the screen brightness after the switching from the AC adapter 30 to the battery 20 to the screen brightness "N-1" lower than the screen brightness "N-2", upon determining that the apparatus is in a dark location on the basis of the ambient brightness detected by the ambient light sensor 115, the information processing apparatus 10 sets the screen brightness "N-1" to a preset value (e.g., 50%) that is lower than the screen brightness "N-2" when the screen brightness "N-2" is not lower than a fixed value, and sets the screen brightness "N-1" to a value (e.g., a screen brightness "N-2"-5%) that is lower than the screen brightness "N-2" by a predetermined percentage when the screen brightness "N-2" is lower than the fixed value. Upon determining that the apparatus is in a bright location on the basis of the ambient brightness detected by the ambient light sensor 115, the information processing apparatus 10 sets the screen brightness "N-1" to a value (e.g., a screen brightness "N-2"-10%) that is lower than the screen brightness "N-2" by a predetermined percentage.

Accordingly, when reducing the screen brightness in response to unplugging of the AC adapter 30 and, hence, switching of the power supply from the AC adapter 30 to the battery 20, the information processing apparatus 10 reduces the screen brightness by prioritizing power saving in dark locations, such as indoors, and by prioritizing visibility in bright locations, such as outdoors, thereby ensuring more appropriate control of the screen brightness according to the connection status of the AC adapter 30 and the ambient brightness.

The control method in the information processing apparatus 10 including the ambient light sensor 115 (an example of the sensor) that detects ambient brightness, the display unit 110 that displays a display image on a screen, and the CPU 171 (an example of the processor) that controls screen brightness of the display unit 110, the apparatus operating using power supplied from the AC adapter 30 and being operable using power supplied from the battery 20 (an example of the built-in battery) when supply of power from the AC adapter 30 is stopped (e.g., when the AC adapter 30 is disconnected), includes the steps, performed by the CPU 171 (e.g., the control unit 200), of: in an event that a power supply switches from the AC adapter 30 to the battery 20, reducing the screen brightness; and, in an event that the power supply switches from the battery 20 back to the AC adapter 30, controlling the screen brightness "N+1" after the switching back to the AC adapter 30 on the basis of the screen brightness "N-2" prior to the switching to the battery 20, the screen brightness "N" prior to the switching back to the AC adapter 30, and any change in ambient brightness detected by the ambient light sensor 115 from the time of switching to the battery 20 until switching back to the AC adapter 30.

Accordingly, when the AC adapter 30 is disconnected and then reconnected, the control method in the information processing apparatus 10 controls the screen brightness "N+1" at the time of reconnection of the AC adapter 30 (screen brightness after the switching back to the AC adapter 30), not based solely on the screen brightness "N" before the AC adapter 30 is reconnected (prior to the switching back to the AC adapter 30), but also taking into consideration the screen brightness "N-2" before the AC adapter 30 is disconnected (prior to the switching to the battery 20) and any change in ambient brightness until the AC adapter 30 is reconnected. This enables more appropriate control of the screen brightness according to the connection status of the AC adapter 30 and the ambient brightness.

While an embodiment of the present invention has been described in detail above with reference to the drawings, the specific configuration is not limited to the above-described embodiment, and designs and the like within the scope not departing from the gist of the present invention are also included. For example, the components described in the above embodiment can be combined in any manner.

Furthermore, the setting values for controlling the screen brightness when the AC adapter 30 is disconnected (setting values for the screen brightness "N-1" relative to the screen brightness "N-2") are not limited to the examples of the screen brightness setting values (%) shown in table TA1 in FIG. 3 and table TA2 in FIG. 5. In addition, although an example of controlling the screen brightness "N+1" at the time of reconnection of the AC adapter 30 by increasing it by a predetermined value (+20% or +10%) relative to the screen brightness "N" depending on the conditions has been described above, the predetermined value (+20% or +10%) is merely an example, and it is not limited thereto.

Furthermore, while the above embodiment has shown an example in which the screen brightness is set using percentages (%), with 100% representing the maximum brightness, the setting is not limited thereto. For example, the screen brightness may be set using 8-bit digital data of "0" to "255", or may be set using the brightness unit (cd/m²).

Although the above embodiment has shown an example in which the AC adapter 30 is connected to the information processing apparatus 10 via the USB connector 120 (USB Type-C connecter), the connection method is not limited thereto.

It should be noted that the information processing apparatus 10 described above has a computer system therein. Then, a program for implementing the functions of the components included in the above-described information processing apparatus 10 may be recorded on a computer-readable recording medium, and this program recorded on the recording medium may be read into the computer system and executed to thereby perform the processing in the components included in the above-described information processing apparatus 10. Herein, causing the "program recorded on the recording medium (to) be read into the computer system and executed" includes installing the program on the computer system. The "computer system" as used herein includes the OS and hardware such as peripheral devices. The "computer system" may include a plurality of computer devices connected via networks including the Internet, a WAN, a LAN, and/or a communication line such as a dedicated line. The "computer-readable recording medium" refers to a storage device such as a portable medium like a flexible disk, a magneto-optical disc, a ROM, or a CD-ROM, or a hard disk incorporated in the computer system. Thus, the recording medium having the program stored therein may be a non-transitory recording medium such as the CD-ROM.

The recording medium also includes an internally or externally provided recording medium that a distribution server can access to distribute the program. It should be noted that the program may be divided into a plurality of pieces, which may be downloaded at different times and combined in each component of the information processing apparatus 10, or alternatively, different distribution servers may distribute these divided pieces of the program. The "computer-readable recording medium" also includes one that holds a program for a fixed period of time, such as a volatile memory (RAM) within a computer system that serves as a server or a client when the program is transmitted over a network. The program may be one that implements some of the functions described above. The program may also be one, a so-called differential file (differential program), that can implement the above-described functions in combination with a program already recorded in the computer system.

Furthermore, some or all of the functions of the information processing apparatus 10 in the above-described embodiment may be realized as an integrated circuit, such as a large scale integration (LSI) circuit. Each function may be implemented individually as a processor, or some or all of the functions may be integrated into a processor. Additionally, the technique for realizing an integrated circuit is not limited to LSI; it may also be implemented using a dedicated circuit or a general-purpose processor. Moreover, if an integrated circuit technology that can replace LSI emerges as semiconductor technology progresses, an integrated circuit according to that technology may also be used.

### Description of Symbols

- 10: information processing apparatus
- 20: battery
- 30: AC adapter
- 110: display unit
- 115: ambient light sensor
- 120: USB connector
- 130: input device
- 131: keyboard
- 133: touchpad
- 140: communication unit
- 150: storage unit
- 160: EC
- 170: system processing unit
- 171: CPU
- 172: GPU
- 173: memory controller
- 174: I/O controller
- 175: system memory
- 180: power supply circuit
- 185: PD controller
- 200: control unit
- 201: ambient brightness acquisition unit
- 202: AC adapter connection confirmation unit
- 203: screen brightness control unit

## Claims

1. An information processing apparatus that operates using power supplied from an AC adapter and is operable using power supplied from a built-in battery when supply of power from the AC adapter is stopped, the apparatus comprising:
a sensor that detects ambient brightness;
a display unit that displays a display image on a screen; and
a processor that controls screen brightness of the display unit,
the processor being operative,
in an event that a power supply switches from the AC adapter to the built-in battery, to reduce the screen brightness, and,
in an event that the power supply switches from the built-in battery back to the AC adapter, to control the screen brightness after the switching back to the AC adapter on the basis of the screen brightness prior to the switching to the built-in battery, the screen brightness prior to the switching back to the AC adapter, and any change in ambient brightness detected by the sensor from the time of switching to the built-in battery until switching back to the AC adapter.

2. The information processing apparatus according to claim 1, wherein the processor is operative,
in the event that the power supply switches from the AC adapter to the built-in battery, to store the screen brightness prior to the switching to the built-in battery in the storage unit as a first screen brightness and
to control the screen brightness after the switching to the built-in battery to a second screen brightness that is lower than the first screen brightness on the basis of the ambient brightness detected by the sensor, and,
in the event that the power supply switches from the built-in battery back to the AC adapter, to store the screen brightness prior to the switching back to the AC adapter in the storage unit as a third screen brightness and,
upon determining that the apparatus has been moved to a bright location from the time of switching to the built-in battery until switching back to the AC adapter on the basis of the change in ambient brightness detected by the sensor, to control the screen brightness after the switching back to the AC adapter to the first screen brightness when the third screen brightness is not higher than the first screen brightness, and to control the screen brightness after the switching back to the AC adapter to a fourth screen brightness that is higher than the third screen brightness by a predetermined value when the third screen brightness is higher than the first screen brightness.

3. The information processing apparatus according to claim 2, wherein the processor is operative, upon determining that the apparatus has been moved to a dark location from the time of switching to the built-in battery until switching back to the AC adapter on the basis of the change in ambient brightness detected by the sensor, to control the screen brightness after the switching back to the AC adapter to a fifth screen brightness that is higher than the third screen brightness by a predetermined value.

4. The information processing apparatus according to claim 2, wherein in controlling the screen brightness after the switching from the AC adapter to the built-in battery to the second screen brightness lower than the first screen brightness,
the processor is operative,
upon determining that the apparatus is in a dark location on the basis of the ambient brightness detected by the sensor, to set the second screen brightness to a preset value that is lower than the first screen brightness when the first screen brightness is not lower than a fixed value, and to set the second screen brightness to a value that is lower than the first screen brightness by a predetermined percentage when the first screen brightness is lower than the fixed value, and,
upon determining that the apparatus is in a bright location on the basis of the ambient brightness detected by the sensor, to set the second screen brightness to a value that is lower than the first screen brightness by a predetermined percentage.

5. A control method in an information processing apparatus including a sensor that detects ambient brightness, a display unit that displays a display image on a screen, and a processor that controls screen brightness of the display unit, the apparatus operating using power supplied from an AC adapter and being operable using power supplied from a built-in battery when supply of power from the AC adapter is stopped,
the method comprising the steps, performed by the processor, of:
in an event that a power supply switches from the AC adapter to the built-in battery, reducing the screen brightness; and,
in an event that the power supply switches from the built-in battery back to the AC adapter, controlling the screen brightness after the switching back to the AC adapter on the basis of the screen brightness prior to the switching to the built-in battery, the screen brightness prior to the switching back to the AC adapter, and any change in ambient brightness detected by the sensor from the time of switching to the built-in battery until switching back to the AC adapter.

6. The control method according to claim 5, further comprising,
in the event that the power supply switches from the AC adapter to the built-in battery, to store the screen brightness prior to the switching to the built-in battery in the storage unit as a first screen brightness and
to control the screen brightness after the switching to the built-in battery to a second screen brightness that is lower than the first screen brightness on the basis of the ambient brightness detected by the sensor, and,
in the event that the power supply switches from the built-in battery back to the AC adapter, to store the screen brightness prior to the switching back to the AC adapter in the storage unit as a third screen brightness and,
upon determining that the apparatus has been moved to a bright location from the time of switching to the built-in battery until switching back to the AC adapter on the basis of the change in ambient brightness detected by the sensor, to control the screen brightness after the switching back to the AC adapter to the first screen brightness when the third screen brightness is not higher than the first screen brightness, and to control the screen brightness after the switching back to the AC adapter to a fourth screen brightness that is higher than the third screen brightness by a predetermined value when the third screen brightness is higher than the first screen brightness.

7. The control method according to claim 6, further comprising, upon determining that the information processing apparatus has been moved to a dark location from the time of switching to the built-in battery until switching back to the AC adapter on the basis of the change in ambient brightness detected by the sensor, to control the screen brightness after the switching back to the AC adapter to a fifth screen brightness that is higher than the third screen brightness by a predetermined value.

8. The control method according to claim 6, wherein in controlling the screen brightness after the switching from the AC adapter to the built-in battery to the second screen brightness lower than the first screen brightness, the method further comprises:
upon determining that the information processing apparatus is in a dark location on the basis of the ambient brightness detected by the sensor, to set the second screen brightness to a preset value that is lower than the first screen brightness when the first screen brightness is not lower than a fixed value, and to set the second screen brightness to a value that is lower than the first screen brightness by a predetermined percentage when the first screen brightness is lower than the fixed value, and,
upon determining that the information processing apparatus is in a bright location on the basis of the ambient brightness detected by the sensor, to set the second screen brightness to a value that is lower than the first screen brightness by a predetermined percentage.
